# EUROPEAN PATENT APPLICATION

(11) **EP 2 889 820 A1**
(43) Date of publication of application: **01.07.2015**
(21) Application number: 14198078.9
(22) Date of filing: 15.12.2014
(51) Int. Cl.: G06Q 10/08, G06Q 10/06

(54) **State based dump location determination**

(30) Priority: 26.12.2013 US 201314140625
(71) Applicant: Dassault Systemes Canada Software Inc., Vancouver, British Columbia V6C 3L2 (CA)
(72) Inventor: Kapalko, Richard, Brisbane, QLD 4000 (AU)
(74) Representative: Bandpay & Greuter

(57) **Abstract**

In an embodiment, a method of determining a storage location includes updating a first state corresponding to a first location in a three-dimensional area (3D area) of the plurality of locations based on a change of second state of a second location. The second location is related to the first location.

## Description

### BACKGROUND OF THE INVENTION

Dump scheduling and spoil or overburden handling is a significant component of mine planning. Mining engineers can manage spoil piles using a number of rectangular locations in a 3D space (e.g., a "block model"). Each rectangular location, or block, is a candidate for a next dump load. If the number of blocks is larger, selecting a candidate for a next dump load can be more difficult. The order of magnitude of the selection computation increases as the number of blocks in the model increases.

### SUMMARY OF THE INVENTION

Typically, mining engineers make use of site specific convention and historical practice to determine the block (e.g., location) of the next dump load. These conventions often employ heuristics, for example left to right or front to back, yielding a strict preference sequence of dump locations. However, characteristics dictate that the heuristic should be calculated in real-time. In other words, the decision selecting the block for the next dump load should be made at the time the load is received.

As one example, acid rock drainage of spoil piles is a major part of mine operations environmental assessment and an integrated feature of any mine plan. Primary control measures include physically segregating potentially acid generating (PAG) waste and non-potentially acid generating (NPAG) waste. As another example, accidents rates may increase with haphazard dump location decisions. Therefore, methods that consider many candidate locations in a preference sequence before reaching a successful decision are not ideal. Rather, the next dump location is a real world decision that is made for every load at the mine. Such a decision can be made more than 100 times per schedule hour for large mine operations.

Important characteristics dictate that the dump sequencing heuristic should be real-time, that is, the decision about where to dump should be made at the time the load is received. Existing methods such as a preference sequence (e.g., "left to right, top to bottom") must unsuccessfully consider many candidate locations, in the preference sequence, before reaching a successful decision. In other words, deciding whether a block is an acceptable place to dump based on vertical constraints (e.g., acidity, filled or floating blocks, or other) and horizontal constraints (e.g., distance to current/future operations). Therefore the complexity of the real-time decision increases as more blocks are available for dumping. Large block models, which can be at least on the order of tens of thousands of blocks, actively discourage using too many considerations when determining a next dump block.

Embodiments of the present invention address the foregoing needs and problems in the art. Embodiments improve or provide new stratified mine dumping scheduling. In particular, embodiments automate the puoritization of dump location preferences in a sequence of dumping activity for stratified mining operations, waste haulage operations, dump (spoil) scheduling operations, etc. Methods and systems disclosed herein may apply to other storage operations having stacked (vertical) and stratified (horizontal) constraints, such as (a) spoil and dump piles in mining operations, (b) pallet and bulk storage warehousing, (c) grain and produce depositories, and other similar operations.

In an embodiment, a method of determining a storage location includes updating a first state corresponding to a first location in a three-dimensional area (3D area) of the plurality of locations based on a change of second state of a second location. The second location is related to the first location.

In another embodiment, the method can include assigning an initial state corresponding to each of a plurality of locations in the 3D area.

In another embodiment, updating the first state corresponding to the first location can include one or more of : (i) if the second location is vertically related to the first location: change the first state from a state of ready to a state of floating if second location is unfilled, and change the state from a state of floating to a state of ready if the second location is filled, (ii) if the second location is horizontally related to the first location: change the first state from a state of ready to a state of lagged if the second location has a current or future operation outstanding, and change the first state from a state of lagged to a state of ready if the second location has completed the current or future operation; (iii) if the first location fills, change the state from ready to full, and (iv) if the first location unfills, change the state from full to ready. A particular location with a state of ready can indicate the location can receive material, and the particular location with a state of floating, lagged, or full indicates the location cannot receive material.

In an embodiment, the second location can be related to the first location by one or more of a vertical relationship or a horizontal relationship. The second location can be related to the first location by a vertical relationship of being stacked. The second location can be related to the first location by a horizontal relationship of one or more of a radius or zone relative to the second location. The radius or zone can indicate unavailable locations.

In an embodiment, the method can include determining the storage location by retrieving the plurality of locations having a state of ready, and selecting a particular location of the retrieved plurality of locations. The method can further include selecting the particular location of the retrieved plurality of locations by retrieving a first location of a sequence list.

In an embodiment, a system for determining a storage location can include a memory storing a plurality of locations, and an update module configured to update a first state corresponding to a first location in a three-dimensional area (3D area) of the plurality of locations based on a change of second state of a second location. The second location can be related to the first location.

The system can further comprise:
- a state module configured to assign an initial state corresponding to each of a plurality of locations in the 3D area;
- the update module is further configured to update the first state corresponding to the first location by one or more of: if the second location is vertically related to the first location: changing the first state from a state of ready to a state of floating if second location is unfilled, and changing the state from a state of floating to a state of ready if the second location is filled; if the second location is horizontally related to the first location: changing the first state from a state of ready to a state of lagged if the second location has a current or future operation outstanding, and changing the first state from a state of lagged to a state of ready if the second location has completed the current or future operation; if the first location fills, changing the state from ready to full, and if the first location unfills, changing the state from full to ready;
- a particular location with a state of ready indicates the location can be filled, and the particular location with a state of floating, lagged, or full indicates the location cannot be filled;
- the second location is related to the first location by one or more of a vertical relationship or a horizontal relationship;
- the second location is related to the first location by a vertical relationship of being stacked;
- the second location is related to the first location by a horizontal relationship of one or more of a radius or zone relative to the second location, the radius or zone indicating unavailable blocks;
- a scheduling module configured to determine the storage location by retrieving the plurality of locations having a state of ready, and selecting a particular location of the retrieved plurality of locations;
- the scheduling module is further configured to select the particular location of the retrieved plurality of locations by retrieving a first location of a sequence list.

In an embodiment, a non-transitory computer-readable medium configured to store instructions for determining a storage location, the instructions, when loaded and executed by a processor, causes the processor to: update a first state corresponding to a first location in a three-dimensional area (3D area) of the plurality of locations based on a change of second state of a second location, the second location related to the first location.

The non-transitory computer-readable medium can further comprise updating the first state corresponding to the first location includes one or more of: if the second location is vertically related to the first location: changing the first state from a state of ready to a state of floating if second location is unfilled, and changing the state from a state of floating to a state of ready if the second location is filled, if the second location is horizontally related to the first location: changing the first state from a state of ready to a state of lagged if the second location has a current or future operation outstanding, and changing the first state from a state of lagged to a state of ready if the second location has completed the current or future operation; if the first location fills, changing the state from ready to full, and if the first location unfills, changing the state from full to ready.

In an embodiment, a computer program comprising instructions for performing the above method.

### BRIEF DESCRIPTION OF THE DRAWINGS

The foregoing will be apparent from the following more particular description of example embodiments of the invention, as illustrated in the accompanying drawings in which like reference characters refer to the same parts throughout the different views. The drawings are not necessarily to scale, emphasis instead being placed upon illustrating embodiments of the present invention.
Fig. 1A is a diagram illustrating an example embodiment a side view of a dump site.
Fig. 1B is a diagram of an example embodiment of a top view of the dump site.
Fig. 2 is a flow diagram illustrating current dump scheduling techniques.
Fig. 3 is a flow diagram illustrating an example embodiment of the present invention implementing real time dump scheduling.
Fig. 4 is a diagram illustrating an example embodiment of a state diagram employed by the present invention.
Fig. 5 illustrates a computer network or similar digital processing environment in which embodiments of the present invention may be implemented.
Fig. 6 is a diagram of an example internal structure of a computer (e.g., client processor/device or server computers) in the computer system of Fig. 5.

### DETAILED DESCRIPTION OF THE INVENTION

A description of example embodiments of the invention follows.

An embodiment of the present invention takes the typical preference sequence of dump locations and adjusts the sequence in real-time based on the given constraints. Rather than managing each sequence item (e.g., a target dump block) as a separate entity, the present system and corresponding method attaches a state characteristic to each of the sequence items. The system receives inputs about operations in nearby blocks (e.g., horizontal constraints) and blocks below (e.g., vertical constraints) and changes the state appropriately. This approach abstracts dissimilar mining constraints, like acid runoff and safety, to a geometrical paradigm, to reduce computational complexity to be linearly related to the number of blocks in the model.

In embodiments of the system, in an example real world model of having greater than 30,000 blocks, this approach reduces of computation by two orders of magnitude. That is, rather than unsuccessfully considering an average of approximately 1000 blocks for every load, the invention can find a successful target block with the first block considered. When dumps can be scheduled at least at the rate of 100 repetitions per schedule hour, a two order of magnitude reduction significantly improves the experience in and performance of the mine planning procedure. This approach is dramatically faster than the currently available computational methods. As well, the simplicity encourages the use of real-time decision making. The mining engineer is more likely to follow the mine schedule when the mine haulage equipment gets directed to the most effective dump location every time.

A user, such as the mining engineer, interacts with the dump scheduling feature of the Minex product (provided by Dassault Systèmes GEOVIA Inc.) by stepping forward within the proposed mining schedule. Note that the intent of this software feature is to create a mining schedule, so the user may step forward or backward as well.

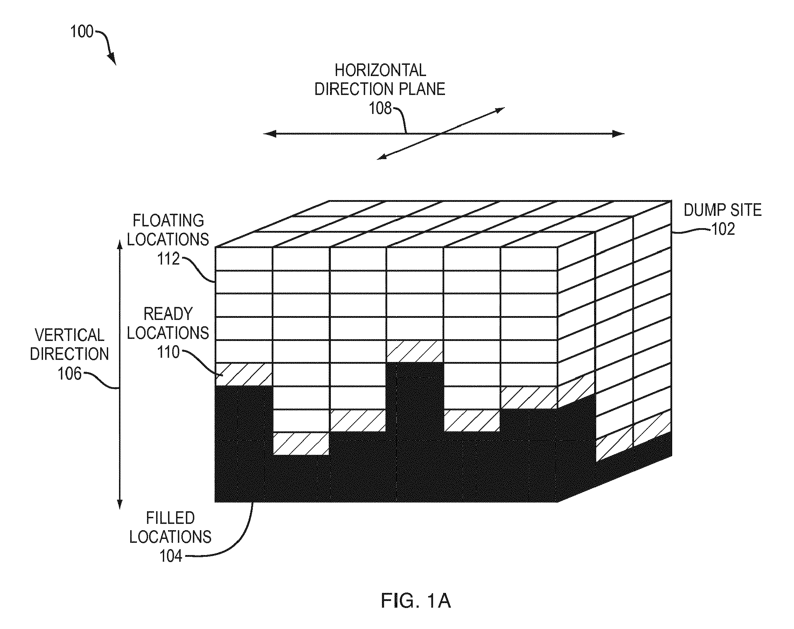

Fig. 1A is a diagram 100 illustrating an example embodiment a side view of a dump site 102. The diagram 100 a dump site 102 having multiple blocks, each block representing a location of the dump site 102. The dump site 102 can have blocks within its structure that are not shown by Fig. 1A, which only shows the outer layer of blocks. The blocks are aligned in a vertical direction 106 and along a horizontal directional plane 108, although other alignments can exist in other embodiments.

The dump site 102 includes multiple filled locations 104. The filled locations 104 are represented in Fig. 1A by being fully shaded. The filled locations 104 are locations which are filled and are no longer available for dumping. The dump site 102 further includes multiple ready locations 110. The ready locations 110 are represented by having diagonal stripes. The ready locations 110 are locations that are ready and available to receive dumping.

Each of the blocks can have a vertical or horizontal relationship to other blocks. An example of a vertical relationship is a vertical alignment, for instance, being stacked in a column. In the vertically aligned columns shown in the dump site 102, the filled locations 104 are stacked on top of one another. For each column, the first block above the filled locations 104 of that column is a ready location 110. All locations above the ready location 110 for a column are floating locations 112. In this manner, ready locations 110 are locations that have support underneath to be available for dumping and no obstructions above to prevent dumping.

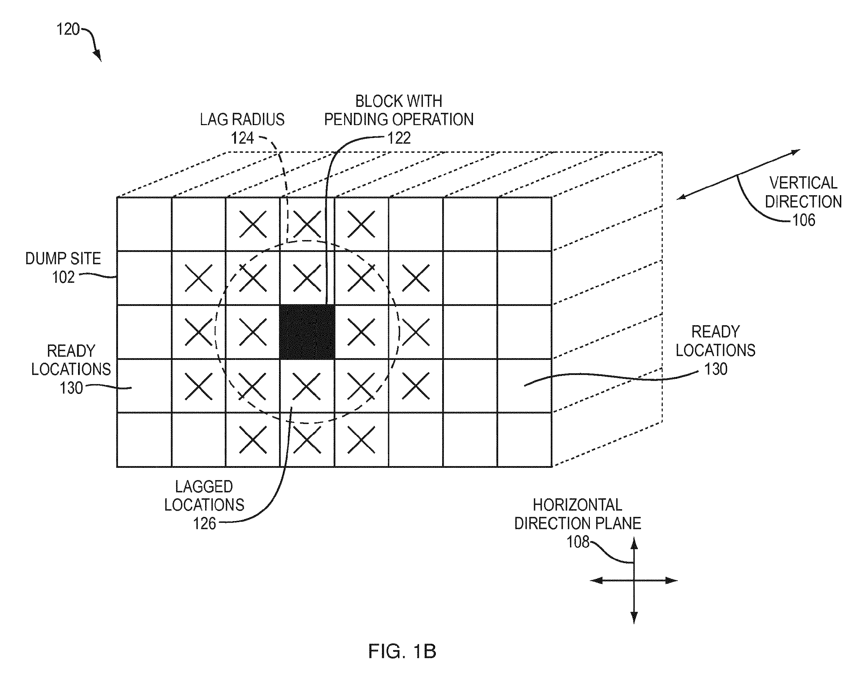

Fig. 1B is a diagram 120 of an example embodiment of a top view of the dump site 102. As in Fig. 1A, the dump site of Fig. 1B has blocks aligned in the vertical direction 106 and the horizontal directional plane 108.

As shown by the top view of Fig. 1B, the dump site has a block with a pending operation 122. The block 122 can be at any depth along the vertical direction in the dump site 102. With respect to the horizontal directional plane 108, however, a mining engineer may desire to limit operations from nearby horizontally located blocks. For example, the machinery required to perform a drop may take up a horizontal space preventing nearby block from being available for dumping. In an embodiment, the system establishes a lag radius 124 around the block with the pending operation 122. Any block within and/or touching the lag radius 124 is a lagged location 126. Lagged locations 126 are blocks that are not available for dumping. Lagged locations 126 are indicated as blocks with an "X." Ready locations 130 are indicated as blocks that are blank. The lag radius 124 is shown to be a circle in this example, however, the lag radius could be other shapes set by the user. The lag radius 124 can dynamically change. For instance, in an example where a telescoping mechanical arm extends across several blocks to reach the block with pending operation 122, the lag radius 124 can be a rectangular shape of varying lengths.

By setting the states of all of the blocks of the dump site 102, the system can therefore select any of the ready locations 110 and 130 of Fig. 1A and 1B, respectively, instead of searching all blocks. The mining engineer can further filter the ready locations 110 and 130 based on other attributes. In a dump site with a large number of blocks, this can vastly reduce the number of potential locations to search for dumping eligibility, and therefore improve the speed and effectiveness of the system.

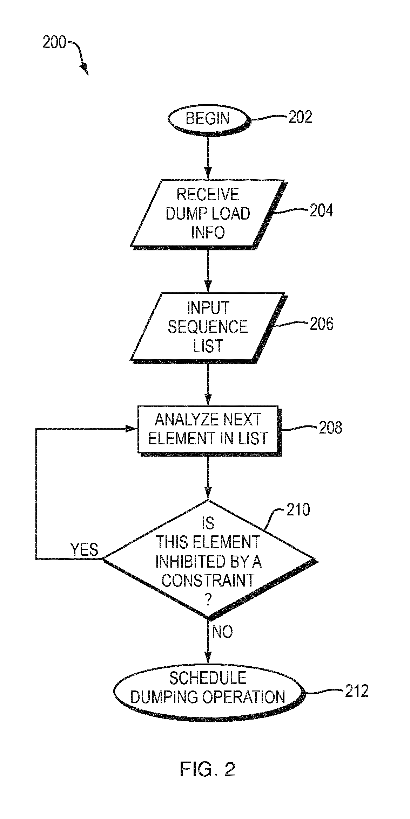

Fig. 2 is a flow diagram 200 illustrating current dump scheduling techniques. The process begins (202) and receives dump load information (204). The process then inputs a sequence list of elements (e.g., blocks, locations, rectangular locations, etc.) (206). The sequence list is a list of elements to search through for potential dumping. The process then analyzes an element of the inputted sequence list (208). If the element is not inhibited by a constraint (210), the process schedules the dumping operation at the element (212). If the element is inhibited by a constraint (210), the process analyzes the next element in the list (208). As many elements in the list can be inhibited by constraints, searching through all possible elements as in the process of Fig. 2 can require excessive processing when an element that is not inhibited by a constraint is not initially found.

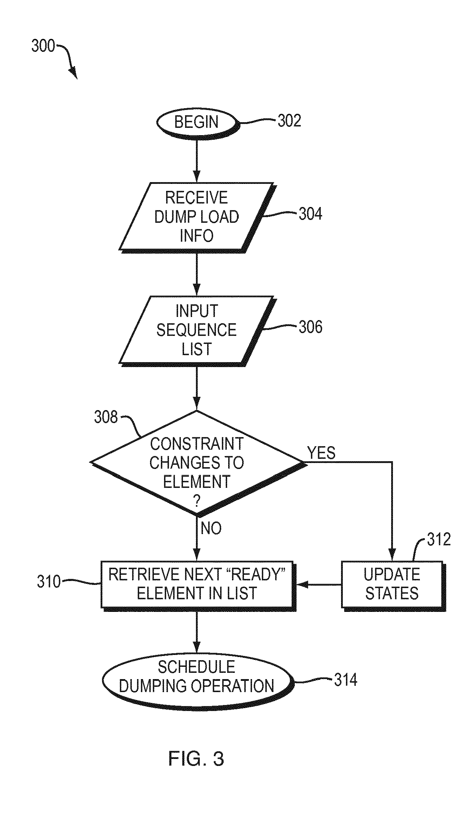

Fig. 3 is a flow diagram 300 illustrating an example embodiment of the present invention implementing real time dump scheduling. The process begins (302) and receives dump load information (304). The process then inputs a sequence list of elements (e.g., blocks, locations, rectangular locations, etc.) (306).

The process then determines whether there are constraint changes to an element (308). If not, the process retrieves the next "ready" element in the list (310) and schedules the dumping operation at the "ready" element (314). However, if there are constraint changes to an element (308), the process updates the states of the elements (312). Then, the process retrieves the next "ready" element in the list (310). By updating the states in one step, the process prevents looping through all of the elements at the dump site. The process retrieves one ready element because all ready elements are defined as being able to accept dumping. The process therefore does not need to loop through multiple elements and check whether they are ready as long as the states are updated.

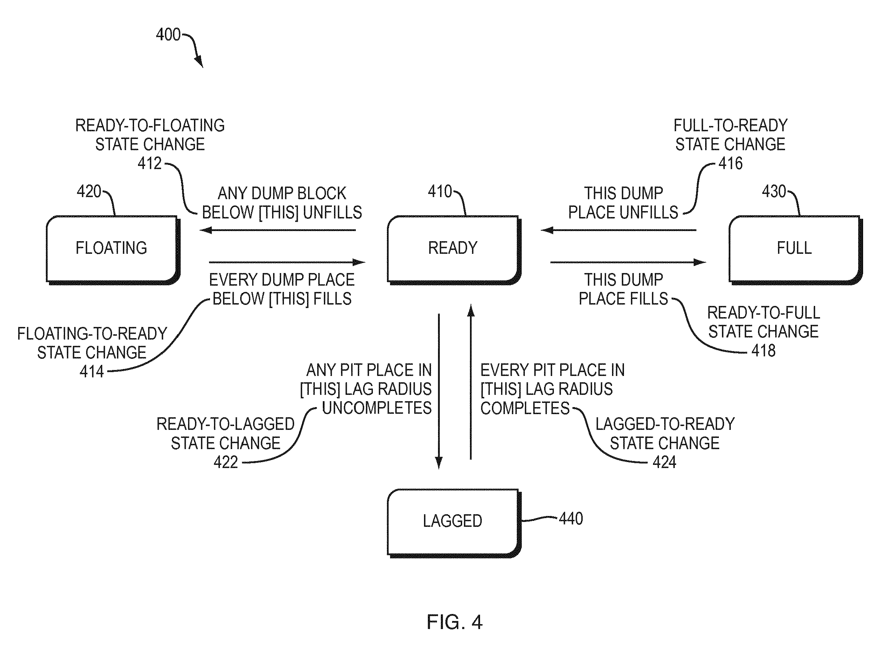

Fig. 4 is a diagram 400 illustrating an example embodiment of a state diagram employed by the present invention. Each block (e.g., location, element) has one of four states to each block. A ready state 410 indicates the block is available for dumping based on sequence. A lagged state 440 indicates that the block is unavailable due to a horizontal constraint. A floating state 420 indicates that the block is unavailable due to a vertical constraint. A full state 430 indicates that dumping has completed for this block.

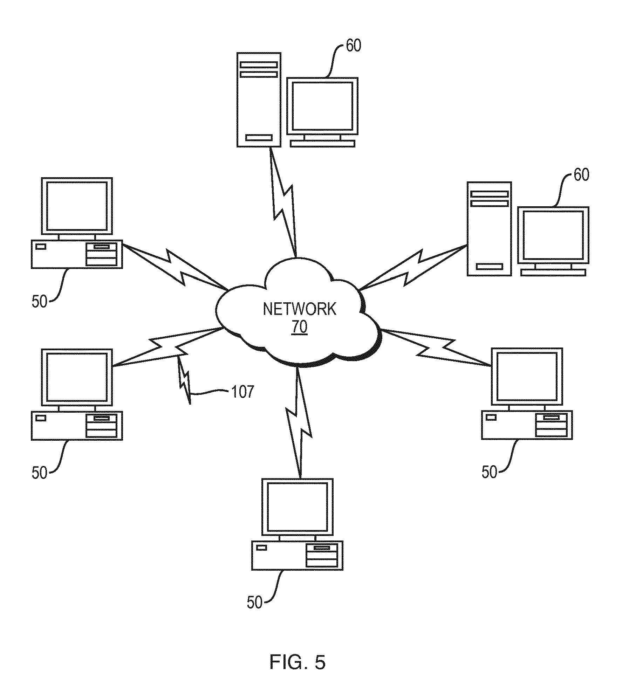

Fig. 5 illustrates a computer network or similar digital processing environment in which embodiments of the present invention may be implemented.

Client computer(s)/devices 50 and server computer(s) 60 provide processing, storage, and input/output devices executing application programs and the like. The client computer(s)/devices 50 can also be linked through communications network 70 to other computing devices, including other client devices/processes 50 and server computer(s) 60. The communications network 70 can be part of a remote access network, a global network (e.g., the Internet), a worldwide collection of computers, local area or wide area networks, and gateways that currently use respective protocols (TCP/IP, Bluetooth®, etc.) to communicate with one another. Other electronic device/computer network architectures are suitable.

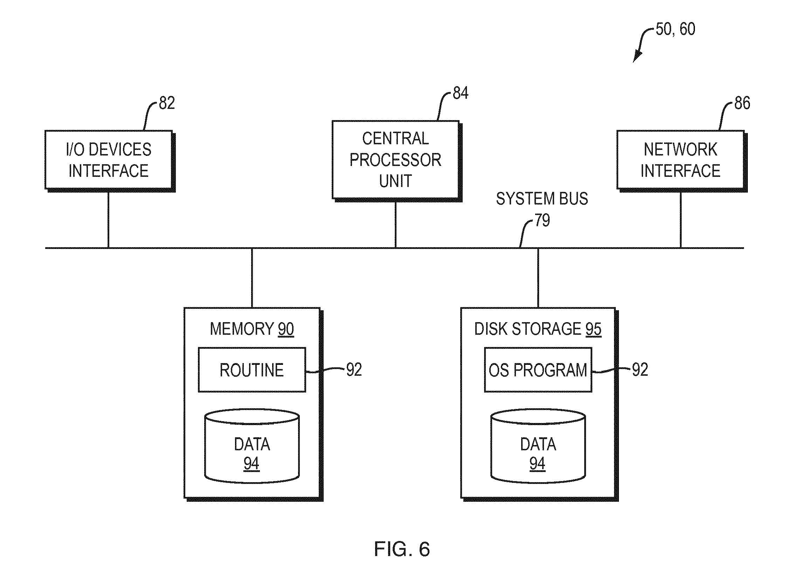

Fig. 6 is a diagram of an example internal structure of a computer (e.g., client processor/device 50 or server computers 60) in the computer system of Fig. 5. Each computer 50, 60 contains a system bus 79, where a bus is a set of hardware lines used for data transfer among the components of a computer or processing system. The system bus 79 is essentially a shared conduit that connects different elements of a computer system (e.g., processor, disk storage, memory, input/output ports, network ports, etc.) that enables the transfer of information between the elements. Attached to the system bus 79 is an I/O device interface 82 for connecting various input and output devices (e.g., keyboard, mouse, displays, printers, speakers, etc.) to the computer 50, 60. A network interface 86 allows the computer to connect to various other devices attached to a network (e.g., network 70 of Fig. 5). Memory 90 provides volatile storage for computer software instructions 92 and data 94 used to implement an embodiment of the present invention (e.g., dump scheduling code detailed above). Disk storage 95 provides non-volatile storage for computer software instructions 92 and data 94 used to implement an embodiment of the present invention. A central processor unit 84 is also attached to the system bus 79 and provides for the execution of computer instructions. The disk storage 95 or memory 90 can provide storage for a database. Embodiments of a database can include a SQL database, text file, or other organized collection of data.

In one embodiment, the processor routines 92 and data 94 are a computer program product (generally referenced 92), including a non-transitory computer-readable medium (e.g., a removable storage medium such as one or more DVD-ROM's, CD-ROM's, diskettes, tapes, etc.) that provides at least a portion of the software instructions for the invention system. The computer program product 92 can be installed by any suitable software installation procedure, as is well known in the art. In another embodiment, at least a portion of the software instructions may also be downloaded over a cable communication and/or wireless connection.

Central to the notion of state changes is the abstraction of real world dump scheduling characteristics to a simple representation. The system can represent geometrical considerations in determining a next dump block by tagging each block with a state. For horizontally related blocks, dumping may not occur within a given distance of another block that has an uncompleted current operation or future mining operation scheduled. In the case of mining and dump operations, this is called "lag." Any block within a lag radius (or lag area/zone) of the block with the uncompleted current operation or future operation is tagged as a "lagged" block and is unavailable for dumping. For vertically related blocks, dumping may not occur in a block unless all blocks below are filled. The notion of "full" is used loosely here as it indirectly involves other class characteristics of the material as well, but is not inherently pertinent to the novel approach described herein. Therefore, any block that is "full," for obvious reasons, is not eligible for a dumping operation. A cell vertically above a "full" block can receive a dumping operation, and can be given a "ready" state." Any cell above the "ready" state cannot receive a dumping operation, and is tagged with a "floating" state.

Referring to FIGS. 4 and 5, a block can change states according to rules governing state changes. For a particular block, if at least one block below the particular block is unfilled, the system changes the particular block's state from Ready to Floating (412). If all blocks below the particular block are filled, the system changes the particular block's state from Floating to Ready (414). If the particular block is within a given distance of a nearby block that is performing mining operations or has future mining operations scheduled, the system changes the particular block's state from Ready to Lagged (422). If all blocks nearby the particular block have completed mining operations, the system changes the particular block's state from Lagged to Ready (424). If the load has filled the particular block, change the state from Ready to Full (418). If the particular block unfills or is emptied, the system changes the state from Full to Ready (416). The state change updates are nearly negligible with respect to performance measures because they address specific items and do not take action on every block in the model. In previous systems, every block is analyzed for every possible schedule operation. State change updates are limited in scope and are triggered by change in states to other blocks, instead of by every scheduled mining operation.

This approach can be applied to any warehouse and depository situation of determining where to store items in an area with a footprint (X-Y) constraint and a stack (Z) constraint, or any area with generic coordinates in a notional vector space. In an embodiment, the system employs a block-layer model which sub-defines the blocks at even greater detail, and in an embodiment, the same concepts applied to blocks can be applied to the sub-defined blocks (e.g., sub-blocks). In addition, calendars, material classes, and equipment definitions can be employed in creating a useful integrated mine planning model.

While this invention has been particularly shown and described with references to example embodiments thereof, it will be understood by those skilled in the art that various changes in form and details may be made therein without departing from the scope of the invention encompassed by the appended claims.

## Claims

1. A method of determining a storage location, the method comprising:
updating a first state corresponding to a first location in a three-dimensional area (3D area) of the plurality of locations based on a change of second state of a second location, the second location related to the first location.

2. The method of Claim 1, further comprising assigning an initial state corresponding to each of a plurality of locations in the 3D area.

3. The method of Claim 1, wherein updating the first state corresponding to the first location includes one or more of:
if the second location is vertically related to the first location:
changing the first state from a state of ready to a state of floating if second location is unfilled, and changing the state from a state of floating to a state of ready if the second location is filled,
if the second location is horizontally related to the first location:
changing the first state from a state of ready to a state of lagged if the second location has a current or future operation outstanding, and changing the first state from a state of lagged to a state of ready if the second location has completed the current or future operation;
if the first location fills, changing the state from ready to full, and
if the first location unfills, changing the state from full to ready.

4. The method of Claim 3, wherein a particular location with a state of ready indicates the location can be filled, and the particular location with a state of floating, lagged, or full indicates the location cannot be filled.

5. The method of Claim 1, wherein the second location is related to the first location by one or more of a vertical relationship or a horizontal relationship.

6. The method of Claim 1, wherein the second location is related to the first location by a vertical relationship of being stacked.

7. The method of Claim 1, wherein the second location is related to the first location by a horizontal relationship of one or more of a radius or zone relative to the second location, the radius or zone indicating unavailable blocks.

8. The method of Claim 1, further comprising determining the storage location by retrieving the plurality of locations having a state of ready, and selecting a particular location of the retrieved plurality of locations.

9. The method of Claim 8, further comprising selecting the particular location of the retrieved plurality of locations by retrieving a first location of a sequence list.

10. A system for determining a storage location, the system comprising:
a memory configured to store instructions and a plurality of locations;
a processor communicatively coupled with the memory, the instructions causing the processor to perform the method according to one of claims 1 to 9.

11. A computer program comprising instructions for performing the method according to one of claims 1 to 9.

12. A computer-readable medium having recorded thereon the computer program of claim 11.
